# EUROPEAN PATENT APPLICATION

(11) **EP 3 026 622 A1**
(43) Date of publication of application: **01.06.2016**
(21) Application number: 14830197.1
(22) Date of filing: 19.02.2014
(51) Int. Cl.: G06Q 30/00

(54) **RECEIVING INFORMATION PROCESSING METHOD AND DEVICE**

(30) Priority: 24.07.2013 CN 201310314178
(71) Applicant: Xiaomi Inc., Beijing 100085 (CN)
(72) Inventor: WAN, Li, Beijing 100085 (CN); DAI, Wei, Beijing 100085 (CN)
(74) Representative: Delumeau, François Guy
(86) International application number: PCT/CN2014/072272
(87) International publication number: WO 2015/010465

(57) **Abstract**

The invention discloses a method and apparatus for processing order information, which belong to the field of electronic commerce. The method includes: receiving an anonymous order instruction sent by a user; performing an anonymization process to order information selected by the user so as to obtain anonymized information corresponding to the order information; generating a first order containing the anonymized information; and providing the first order to a third party. The apparatus includes: a receiving module configured to receive an anonymous receiving instruction sent by a user; an anonymous processing module configured to perform an anonymous process to receiving information selected by the user so as to obtain anonymous information corresponding to the receiving information; an order generating module configured to generate a first order containing the anonymous information obtained by the anonymous processing module; and a providing module configured to provide the first order generated by the order generating module to a third party. In the present disclosure, the user's anonymous information is provided to the third party instead of the user's receiving information, such that the user's privacy may be protected.

## Description

### CROSS REFERENCE TO RELATED APPLICATIONS

The present application is based upon and claims priority to Chinese Patent Application No. 201310314178.9, filed on July 24, 2013, the entire contents of which are incorporated herein by reference.

### TECHNICAL FIELD

The invention relates to the field of electronic commerce and, more particularly, to a method and apparatus for processing order information.

### BACKGROUND

With the popularity of the Internet, the electronic transactions are developing rapidly, and more and more people choose the way of electronic transactions to purchase commodities.

Generally, the procedure of an electronic transaction is as follows: firstly, a user selects the commodities to be purchased online, then inputs order information, after that, the service provider will generate an order based on the order information filled by the user, and directly provide the order containing the order information filled by the user to a third party (logistics or suppliers), and finally the third party will deliver the commodities purchased by the user to the user according to the order information, wherein the order information filled by the user generally includes the user's appellation, telephone number and so on.

When seeking to achieve the invention, the inventor found that there are at least the following problems in the above procedure.

In order to deliver commodities to the user, the service provider needs to provide the third party with privacy information of the user, such as the user's appellation and telephone number, thereby the privacy of the user is leaked to the third party, and thus it is impossible to provide protection for the user's privacy.

### SUMMARY

In order to solve the problem of leakage of the user's privacy existing in the prior art, a method and an apparatus for processing order information are provided by embodiments of the invention. The technical solutions are as follows.

According to a first aspect of the invention, an embodiment in the invention provides a method for processing order information, which comprises steps of:
receiving an anonymous order instruction sent by a user;
performing an anonymization process to order information selected by the user so as to obtain anonymized information corresponding to the order information;
generating a first order containing the anonymized information; and
providing the first order to a third party.

In a particular embodiment, the order information includes at least the user's real contact information and real appellation, and the anonymized information includes at least the user's virtual contact information and virtual appellation.

In a particular embodiment, the step of performing the anonymization process to the order information selected by the user comprises steps of:
generating a virtual appellation corresponding to the user's real appellation according to a first preset rule; and/or
generating a virtual contact information corresponding to the user's real contact information according to a second preset rule, and associating the virtual contact information with the real contact information.

In a particular embodiment, when the real contact information and the virtual contact information are a real contact telephone number and a virtual contact telephone number respectively, the step of associating the virtual contact information with the real contact information comprises a step of:
setting the real contact telephone number as a call forwarding number corresponding to the virtual contact telephone number.

Furthermore, the step of setting the real contact telephone number as the call forwarding number corresponding to the virtual contact telephone number comprises steps of:
when the virtual contact telephone number is a fixed telephone number or a mobile telephone number, sending a call forwarding instruction to a telephone exchange such that the telephone exchange sets the real contact telephone number as the call forwarding number of the virtual contact telephone number; and
when the virtual contact telephone number is a network telephone number, sending a call forwarding instruction to an Instant Messenger IM server or a Voice over Internet Protocol VoIP server such that the IM server or the VoIP server sets the real contact telephone number as the call forwarding number of the virtual contact telephone number.

In a particular embodiment, the method further comprises a step of:
when receiving a receipt success instruction sent by the user, disassociating the virtual contact information from the real contact information.

According to a second aspect of the invention, an embodiment in the invention provides an apparatus for processing order information, which comprises:
a receiving module configured to receive an anonymous order instruction sent by a user;
an anonymization processing module configured to perform an anonymization process to order information selected by the user so as to obtain anonymized information corresponding to the order information;
an order generating module configured to generate a first order containing the anonymized information obtained by the anonymization processing module; and
a providing module configured to provide the first order generated by the order generating module to a third party.

In a particular embodiment, the order information includes at least the user's real contact information and real appellation, and the anonymized information includes at least the user's virtual contact information and virtual appellation.

In a particular embodiment, the anonymization processing module includes:
an appellation processing unit configured to generate a virtual appellation corresponding to the user's real appellation according to a first preset rule; and/or
a contact processing unit configured to generate a virtual contact information corresponding to the user's real contact information according to a second preset rule, and associate the virtual contact information with the real contact information.

In a particular embodiment, the contact processing unit is configured to:
set the real contact telephone number as a call forwarding number corresponding to a virtual contact telephone number when the real contact information and the virtual contact information are a real contact telephone number and a virtual contact telephone number respectively.

Furthermore, the contact processing unit is configured to:
send a call forwarding instruction to a telephone exchange such that the telephone exchange sets the real contact telephone number as the call forwarding number of the virtual contact telephone number, when the virtual contact telephone number is a fixed telephone number or a mobile telephone number; and
send the call forwarding instruction to an Instant Messenger IM server or a Voice over Internet Protocol VoIP server such that the IM server or the VoIP server sets the real contact telephone number as the call forwarding number of the virtual contact telephone number, when the virtual contact telephone number is a network telephone number.

In a particular embodiment, the contact processing unit is further configured to:
disassociate the virtual contact information from the real contact information when receiving a receipt success instruction sent by the user.

The technical solutions provided by the embodiments of the invention may include the following advantageous effects:
the anonymized information, instead of the user's order information, is provided to the third party, and the real information of the user is concealed, such that the user's information will not leak to the third party except the user and the service provider, and thus the user's privacy is protected.

It should be understood that, the above general description and the following detailed description are only illustrative and explanatory, but do not restrict the invention.

### BRIEF DESCRIPTION OF THE DRAWINGS

In order to explain the technical solutions in the embodiments of the invention more clearly, the drawings needed for describing the embodiments will be introduced simply below. Apparently, the drawings described below are merely for some embodiments of the invention. For the skilled person in the art, other drawings may be also obtained based on these drawings without inventive labor.
Figure 1 is a flowchart of a method for processing order information provided by an embodiment of the invention;
Figure 2 is a flowchart of another method for processing order information provided by an embodiment of the invention;
Figure 3 is an illustrative diagram of a procedure for performing an anonymization process to the order information provided by an embodiment of the invention;
Figure 4 is an illustrative diagram showing that a telephone exchange sets a call forwarding provided by an embodiment of the invention;
Figure 5 is an illustrative diagram showing that an IM server or a VoIP server sets a call forwarding provided by an embodiment of the invention;
Figure 6 is an illustrative diagram showing that a third party communicates with the user through the call forwarding provided by an embodiment of the invention;
Figure 7 is an illustrative diagram showing a recovering procedure provided by an embodiment of the invention;
Figure 8 is an illustrative diagram showing a structure of an apparatus for processing the order information provided by an embodiment of the invention;
Figure 9 is an illustrative diagram showing a structure of another apparatus for processing the order information provided by an embodiment of the invention; and
Figure 10 is a hardware structural diagram of the apparatus for processing the order information provided by an embodiment of the invention.

The accompanying drawings are incorporated in and constitute a part of the specification, illustrate embodiments in accordance with the invention, and serve to explain the principles of the invention together with the description.

### DETAILED DESCRIPTION

For making the objectives, technical solutions and advantages of the invention to be more apparent, hereinafter, the embodiments of the invention will be further described in detail in combination with the accompanying drawings.

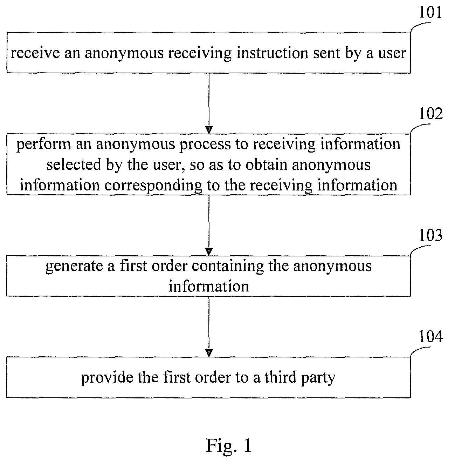

Figure 1 is a flowchart of a method for processing order information according to an exemplary embodiment, and the method includes the following steps.
In step 101, an order anonymization instruction sent by a user is received.
In step 102, an anonymous process is performed on order information selected by the user, so as to obtain anonymized information corresponding to the order information.

In the invention, order information includes at least the user's real contact information, real appellation, real address and other information. Here, the user may select order information which is needed to be performed with an anonymization process, and the order information selected by the user may be one or more order information input by the user, for example, the user's real appellation is selected to be performed with the anonymization process, and/or the user's real contact information is selected to be performed with the anonymization process.

In step 103, a first order containing the anonymized information is generated.

In step 104, the first order is provided to a third party.

In this embodiment, the third party includes but is not limited to logistics, suppliers and so on.

In the embodiment of the invention, the anonymized information, instead of the user's order information, is provided to the third party, and the real information of the user is concealed, such that the user's privacy information will not leak to the third party except the user and the service provider, and thus the user's privacy is protected.

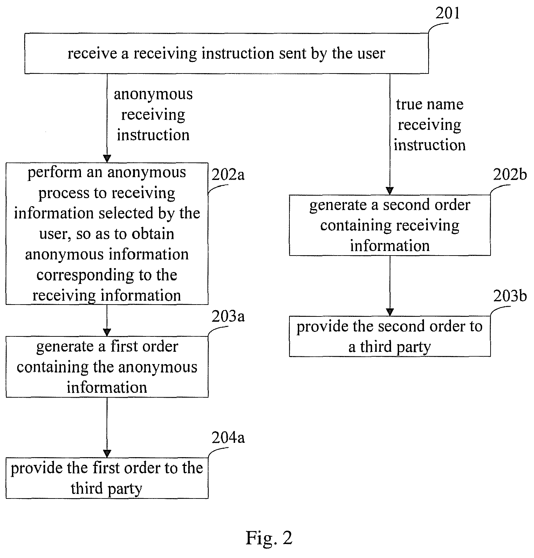

Figure 2 is a flowchart illustrating a method for processing order information according to an exemplary embodiment, and the method includes the following steps.

In step 201, a order instruction sent by a user is received.

In this embodiment, the order instruction may be an anonymous order instruction or a real appellation order instruction. In the case that the order instruction is an anonymous order instruction, step 202a is performed; and in the case that the order instruction is a real appellation order instruction, step 202b is performed.

In general, the user will fill in the order information when determining to purchase the commodities. After receiving the order information, the service provider may ask the user if he needs an anonymous receipt. If the user selects to receive an anonymous receipt, the service provider will receive an anonymous order instruction. If the user selects to receive a real appellation receipt (or non-anonymous receipt), the service provider will receive a real appellation receiving instruction.

In step 202a, an anonymization process is performed on order information selected by the user, so as to obtain anonymized information corresponding to the order information.

In this embodiment, order information includes at least the user's real contact information, real appellation, real address and other information. Here, the user may select order information which is needed to be performed with the anonymization process, and the order information selected by the user may be one or more of the order information input by the user, for example, the user's real appellation is selected to be performed with the anonymization process, and/or the user's real contact information is selected to be performed with the anonymization process.

Here, when the user selects to perform an anonymization process to the user's real contact information and real appellation in the order information, the resulted anonymized information corresponds to the user's virtual contact and virtual appellation.

The real appellation and real contact information are respectively the user's appellation and contact information (such as name and telephone number) used in the real life, and the virtual appellation and virtual contact information are the appellation and contact information that are different from the user's appellation and contact information used in the real life, the role of the virtual appellation and virtual contact information is merely for facilitating the third party to contact with the user, and allowing the commodities purchased by the user to be successfully delivered to the user.

For example, the real contact information may be a real contact telephone number, which is usually a fixed telephone number or a mobile telephone number, and accordingly, the virtual contact information is a virtual contact telephone number associated with the real contact telephone number, and the virtual contact telephone number may be one or more of a fixed telephone number, a mobile telephone number and a network telephone number.

For example, the real contact information may also be a real e-mail address, and accordingly, the virtual contact information may be a virtual e-mail address.

During the implementation, when the user selects the user's real contact information and real appellation in the order information to be performed with the anonymization process, the step 202a may include: step A), generating a virtual appellation corresponding to the user's real appellation according to a first preset rule; and step B), generating a virtual contact information corresponding to the user's real contact information according to a second preset rule, and associating the virtual contact information with the user's real contact information.

In the embodiment, when the user selects the real contact information or real appellation in the order information to be performed with the anonymization process, the step 202a may include the above step A) or step B).

In actual applications, generally, a database may be established, and the virtual appellations and the virtual contact information are stored in the database for selection.

When setting the virtual appellation for the user, the step of generating the virtual appellation corresponding to the user's real appellation according to the first preset rule may include steps of: arbitrarily selecting a virtual appellation from the database as the virtual appellation of the user, or selecting an unused virtual appellation from the database as the virtual appellation of the user; and after selecting the virtual appellation, establishing a correspondence relation between the real appellation of the user and the virtual appellation of the user, i.e., correlating the virtual appellation with the real appellation of the user. One virtual appellation may be simultaneously used by one or more users.

When setting the virtual contact information for the user, the step of generating the virtual contact information corresponding to the real contact information of the user according to the second preset rule may include steps : selecting an unused virtual contact information from the database as the user's virtual contact information. Generally, one virtual contact can be used by only one user at one time, and after selecting the user's virtual contact information, a correspondence relation between the real contact information of the user and the virtual contact information of the user is established.

When adopting a virtual contact telephone number as the virtual contact information, a virtual contact telephone number in the database depends on devices (such as telephone exchanges) purchased by the service provider from the communication operators, and such devices are bounded with multiple available phone numbers. In this case, the step of associating the virtual contact information with the real contact information may include: setting the real contact telephone number as a call forwarding number corresponding to a virtual contact telephone number.

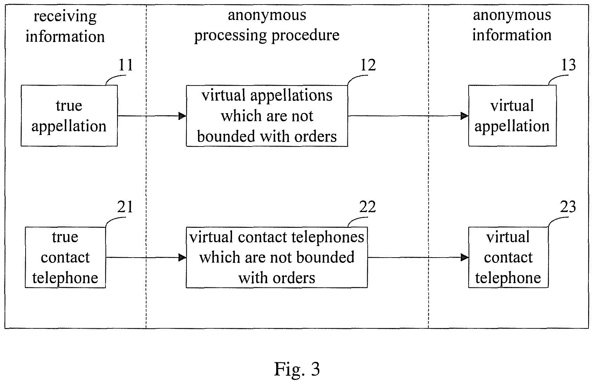

Figure 3 illustrates a detailed flow for performing an anonymization process to order information (taking as an example that the order information includes a real appellation and a real contact telephone number) according to an exemplary embodiment. As shown in Figure 3, the procedure for performing the anonymization process to the real appellation includes: determining the real appellation 11 of the user to be processed currently, and then, from the virtual appellations 12 which are not bounded with orders in the database, selecting a virtual appellation 13 as the virtual appellation corresponding to the real appellation 11 of the user. The procedure for performing the anonymization process to the real contact telephone number includes: determining the real contact telephone number 21 of the user to be processed currently, and then, from the virtual contact telephone numbers 22 which are not bounded with orders in the database, selecting a virtual contact telephone number 23 as the virtual contact telephone number 23 corresponding to the real contact telephone number 21 of the user, and setting the real contact telephone number 21 as a call forwarding number of the virtual contact telephone number 23, wherein the virtual contact telephone number 23 is the virtual contact information corresponding to the real contact information of the user.

For example, in the implementations, the virtual contact telephone number may be a fixed telephone number, a mobile telephone number, or a network telephone number. When the virtual contact telephone number is a fixed telephone number or a mobile telephone number, the step of setting the real contact telephone number as the call forwarding number corresponding to the virtual contact telephone number includes: sending a call forwarding instruction to the telephone exchange, and then the telephone exchange sets the real contact telephone number as the call forwarding number of the virtual contact telephone number. When the virtual contact telephone number is a network telephone number, the step of setting the real contact telephone number as the call forwarding number corresponding to the virtual contact telephone number includes: sending a call forwarding instruction to an IM (Instant Messenger) server or a VoIP (Voice over Internet Protocol) server, and then the IM server or the VoIP server sets the real contact telephone number as the call forwarding number of the virtual contact telephone number.

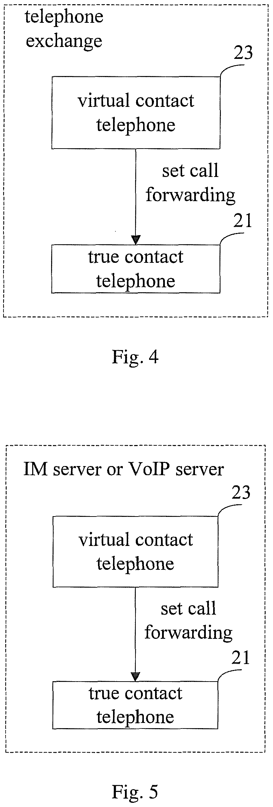

Figures 4 and 5 are flowcharts respectively illustrating that the telephone exchange and the IM server or the VoIP server sets the call forwarding according to an exemplary embodiment. As shown in Figure 4, if the virtual contact telephone number is a fixed telephone number or a mobile telephone number, the telephone exchange will set a call forwarding from the virtual contact telephone number 23 generated by the second preset rule to the real contact telephone number 21. As shown in Figure 5, if the virtual contact telephone number is a network telephone number, the IM server or the VoIP server will set a call forwarding from the virtual contact telephone number 23 generated by the second preset rule to the real contact telephone number 21.

In step 202b, a second order containing order information is generated.

The step 202b may include: using the user's real appellation as the user's appellation in the second order, and using the real contact information of the user as the user's contact information in the second order.

In step 203a, a first order containing the anonymized information is generated. The step 203a is performed after the step 202a.

The step 203a may include: using the user's virtual appellation as the user's appellation in the first order, and using the virtual contact information of the user as the user's contact information in the first order. By the step 203a, the anonymized order information can be bounded together with the first order.

In the present embodiment, the first order may also include information on the commodities purchased by the user and the shipping address specified by the user, which is not limited by the invention.

In step 203b, the second order is provided to a third party. The step 203b is performed after the step 202b.

In step 204a, the first order is provided to a third party. The step 204a is performed after the step 203a.

In the present embodiment, the third party is a third party except the user and the service provider. For example, the third party may be logistics.

For example, the first order may be electronic information or information printed on an entity.

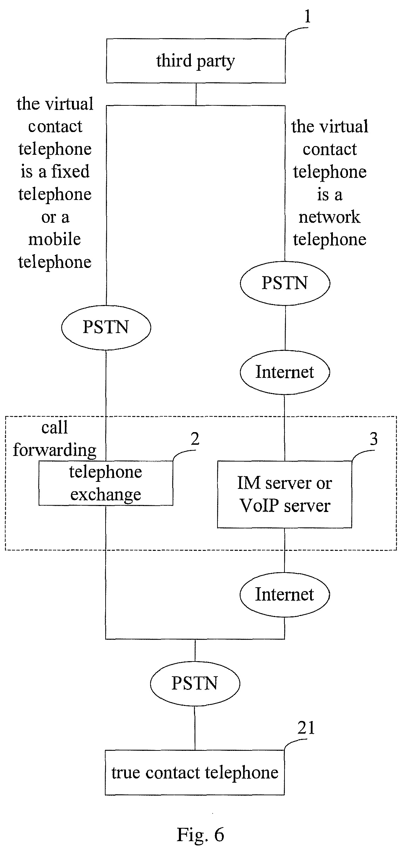

After the third party obtains the first order, if he wants to contact with the user, he may dial the virtual contact telephone number in the first order. When the third party dials the virtual contact telephone number in the first order, since a call forwarding has been set, the telephone exchange, IM server or VoIP server will automatically forward it from the virtual contact telephone number to the real contact telephone number, so that the third party can communicate with the user. The procedure in which the third party 1 dials the virtual contact telephone number in the first order to communicate with the user is shown in Figure 6. When the virtual contact telephone number is a fixed telephone number or a mobile telephone number, the virtual contact telephone is connected to the telephone exchange 2 via PSTN (Public Switched Telephone Network), then the telephone exchange 2 performs a call forwarding to establish a communication with the real contact telephone 21 via the PSTN, so that the third party 1 can talk to the user. When the virtual contact telephone number is a network telephone number, the virtual contact telephone is connected to the IM server or the VoIP server 3 via PSTN and Internet, then the IM server or the VoIP server 3 performs a call forwarding to establish communication with the real contact telephone 21 via the Internet and PSTN, so that the third party 1 can talk to the user.

In one implementation of the invention, when the step 202a includes associating the virtual contact information with the real contact information, the method may further include: when receiving a receipt success instruction sent by the user, disassociating the virtual contact information from the real contact information, so that the virtual contact telephone number can be used by other users, and thus saving resources.

When the real contact number and the virtual contact number are a real contact telephone number and a virtual contact telephone number respectively, disassociating the virtual contact information from the real contact information may include: cancelling the call forwarding setting of the virtual contact telephone.

In implementations, when the virtual contact telephone number is a fixed telephone number or a mobile telephone number, cancelling the call forwarding setting of the virtual contact telephone number may include: sending an instruction for releasing the call forwarding to the telephone exchange, so that the telephone exchange cancels the call forwarding setting of the virtual contact telephone; and when the virtual contact telephone number is a network telephone number, cancelling the call forwarding setting of the virtual contact telephone number may include: sending an instruction for releasing the call forwarding to the IM server or the VoIP server, so that the IM server or the VoIP server cancels the call forwarding setting of the virtual contact telephone.

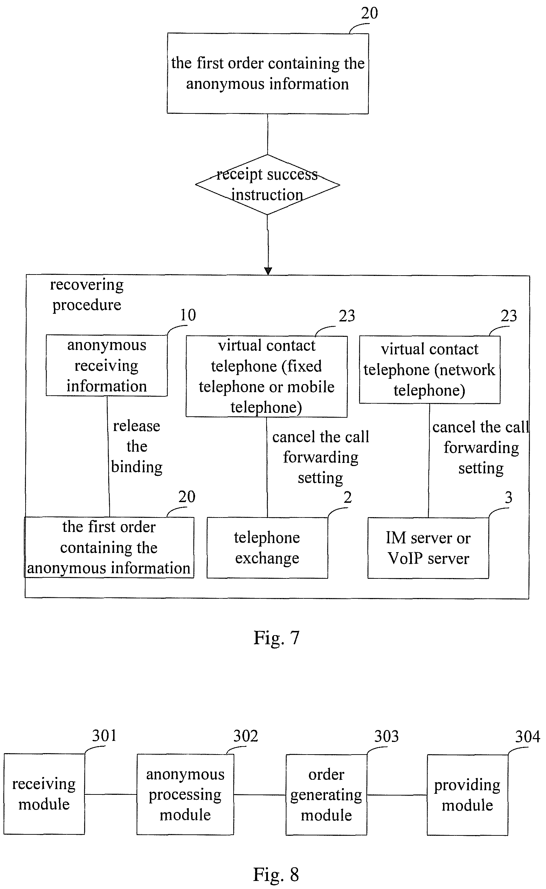

Figure 7 illustrates a procedure of recovering the anonymized information after receiving the receipt success instruction sent by the user according to an exemplary embodiment. As shown in Figure 7, as to a first order 20 containing the anonymized information 10, after receiving the receipt success instruction corresponding to the first order 20, it is required to release the binding of the anonymized order information 10 and the first order 20. If the anonymized order information 10 includes the virtual contact telephone number, the call forwarding setting of the virtual contact telephone number 23 is needed to be cancelled.

In the embodiment of the invention, the anonymized information, instead of the user's order information, is provided to the third party, and the real information of the user is concealed, such that the user's information will not leak to the third party except the user and the service provider, and thus the user's privacy is protected.

Figure 8 is a diagram showing an apparatus for processing order information according to an exemplary embodiment, the apparatus includes:
a receiving module 301 configured to receive an anonymous order instruction sent by a user;
an anonymization processing module 302 configured to perform an anonymization process to order information selected by the user so as to obtain anonymized information corresponding to the order information;
an order generating module 303 configured to generate a first order containing the anonymized information obtained by the anonymization processing module 302; and
a providing module 304 configured to provide the first order generated by the order generating module 303 to a third party.

In the embodiment of the invention, the anonymized information, instead of the user's order information, is provided to the third party, and the real information of the user is concealed, such that the user's information will not leak to the third party except the user and the service provider, and thus the user's privacy is protected.

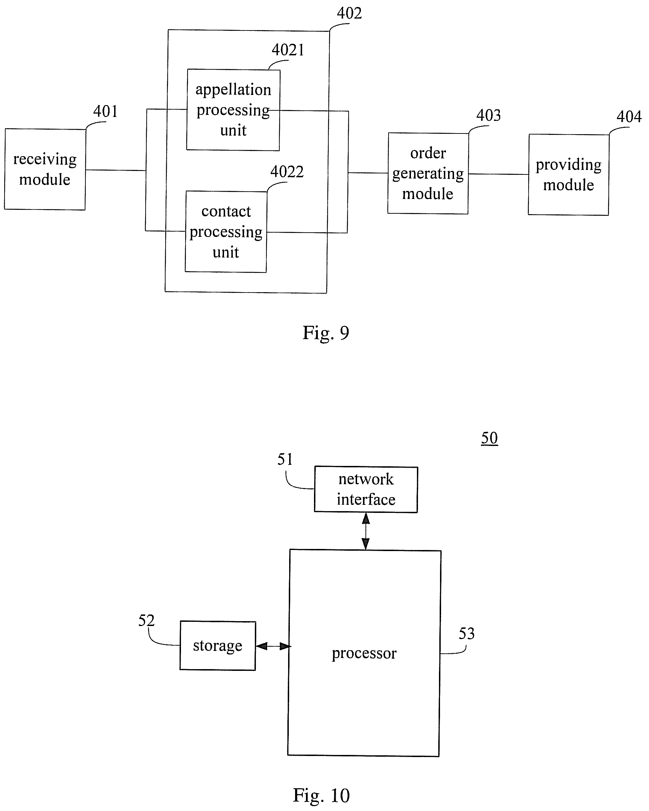

The invention is further referred to Figure 9, which shows an apparatus for processing order information according to an exemplary embodiment, the apparatus includes:
a receiving module 401 configured to receive an anonymous order instruction sent by a user;
an anonymization processing module 402 configured to perform an anonymization process to order information selected by the user so as to obtain anonymized information corresponding to the order information;
an order generating module 403 configured to generate a first order containing the anonymized information obtained by the anonymization processing module 402; and
a providing module 404 configured to provide the first order generated by the order generating module 403 to a third party.

In this embodiment, the order information includes at least the user's real contact information and real appellation, and the anonymized information includes at least the user's virtual contact information and virtual appellation.

In one implementation of this embodiment, the anonymization processing module 402 may include:
an appellation processing unit 4021 configured to generate a virtual appellation corresponding to the user's real appellation according to a first preset rule; and/or
a contact processing unit 4022 configured to generate a virtual contact information corresponding to the user's real contact information according to a second preset rule, and associate the virtual contact information with the real contact information.

For example, the contact processing unit 4022 may be configured to set the real contact telephone number as a call forwarding number corresponding to the virtual contact telephone number, when the real contact information and the virtual contact information are the real contact telephone number and the virtual contact telephone number respectively.

In this embodiment, the contact processing unit 4022 may be configured to send a call forwarding instruction to a telephone exchange such that the telephone exchange sets the real contact telephone number as the call forwarding number of the virtual contact telephone number, when the virtual contact telephone number is a fixed telephone number or a mobile telephone number; and to make the IM server or the VoIP server set the real contact telephone number as the call forwarding number of the virtual contact telephone number, when the virtual contact telephone number is a network telephone number.

In another implementation of this embodiment, the contact processing unit 4022 may also be configured to disassociate the virtual contact information from the real contact information when receiving a receipt success instruction sent by the user.

For example, the contact processing unit 4022 may be configured to cancel the call forwarding setting of the virtual contact telephone number when the real contact information and virtual contact information are a real contact telephone number and a virtual contact telephone number, respectively.

The contact processing unit 4022 may be configured to send an instruction for releasing the call forwarding to the telephone exchange such that the telephone exchange cancels the call forwarding setting of the virtual contact telephone number when the virtual contact telephone number is a fixed telephone number or a mobile telephone number; and to send an instruction for releasing the call forwarding to the IM server or the VoIP server such that the IM server or the VoIP server cancels the call forwarding setting of the virtual contact telephone number when the virtual contact telephone number is the network telephone number.

In the embodiment of the invention, the anonymized information, instead of the user's order information, is provided to the third party, and the real information of the user is concealed, such that the user's information will not leak to the third party except the user and the service provider, and thus the user's privacy is protected.

Figure 10 shows an apparatus for processing order information according to an exemplary embodiment, and the apparatus may be a computer or a server. Referring to Figure 10, the apparatus 50 includes a network interface 51, a storage 52, a processor 53 and other components. The person skilled in the art will appreciate that, the structure shown in Figure 10 does not restrict the apparatus 50, and the apparatus 50 may include more or less components than the illustrated components, or may include some combinations of the components, or may include different arrangements of the components.

Hereinafter, the introduction to respective constituent components of the apparatus 50 will be given in detail in combination with Figure 10.

The storage 52 may be used to store soft programs and application modules, and the processor 53 performs a variety of functional applications and data processing of the apparatus 50 by running the soft programs and application modules stored in the storage 52. The storage 52 may essentially include a program storing area and a data storing area, wherein the program storing area may store an operating system, the application program required by at least one function (such as anonymous processing), and the like; and the data storing area may store the data (such as the anonymous information) created by the processing of the apparatus 50 and the like. Further, the storage 52 may include a high-speed RAM (Random Access Memory), and may also include a non-volatile memory, such as at least one disk storage device, flash memory device, or other volatile solid-state memory devices.

The network interface 51 may be used to receive the anonymous order instruction sent by the user.

The processor 53 is a control center of the apparatus 50, and connects respective parts of the entire computer via various interfaces and lines.

The processor 53 may perform an anonymization process to the order information selected by the user so as to obtain the anonymized information corresponding to the order information and generate the first order containing the anonymized information, by running or executing the software programs and application modules stored in the storage 52, and invoking the data stored in the storage 52.

The network interface 51 may be used to provide the first order generated by the processor 53 to the third party.

In this embodiment, the order information includes at least the user's real contact information and real appellation, and the anonymized information includes at least the user's virtual contact information and virtual appellation.

In one implementation of this embodiment, the processor 53 may be used to generate the virtual appellation corresponding to the user's real appellation according to the first preset rule; and/or generate the virtual contact information corresponding to the user's real contact information according to the second preset rule and associate the virtual contact information with the real contact information.

For example, the processor 53 may be used to set the real contact telephone number as the call forwarding number corresponding to the virtual contact telephone number when the real contact information and the virtual contact information are a real contact telephone number and a virtual contact telephone number, respectively.

For example, the processor 53 may be used to send a call forwarding instruction to a telephone exchange such that the telephone exchange sets the real contact telephone number as the call forwarding number of the virtual contact telephone number when the virtual contact telephone number is a fixed telephone number or a mobile telephone number; and to make the IM server or the VoIP server set the real contact telephone number as the call forwarding number of the virtual contact telephone number when the virtual contact telephone number is a network telephone number.

In another implementation of this embodiment, the processor 53 may also be used to disassociate the virtual contact information from the real contact information when receiving a receipt success instruction sent by the user.

For example, the processor 53 may be used to cancel the call forwarding setting of the virtual contact telephone number when the real contact information and virtual contact information are the real contact telephone number and virtual contact telephone number, respectively.

For example, the processor 53 may be used to send an instruction for releasing the call forwarding to the telephone exchange such that the telephone exchange cancels the call forwarding setting of the virtual contact telephone number when the virtual contact telephone number is a fixed telephone number or a mobile telephone number; and to send an instruction for releasing the call forwarding to the IM server or the VoIP server such that the IM server or the VoIP server cancels the call forwarding setting of the virtual contact telephone number when the virtual contact telephone is a network telephone number.

In the embodiment of the invention, the anonymized information, instead of the user's order information, is provided to the third party, and the real information of the user is concealed, such that the user's information will not leak to the third party except the user and the service provider, and thus the user's privacy is protected.

It should be noted: the apparatuses for processing the order information provided by the above-described embodiments are exemplified, at the time of processing the order information, by the division of the above-mentioned respective functional modules, but in implementations, the above functions may be distributed to be completed by different functional modules as necessary, i.e., the inner structure of the apparatus may be divided into different functional modules for completing all or part of the functions mentioned above. In addition, the embodiments of the method for processing the order information provided by the above embodiments belong to the same concept, and the specific implementations thereof may be referred to the method embodiments for details, which are not repeated redundantly herein.

The serial numbers of the above embodiments in the invention are only for depiction, but not for showing the superiority and inferiority of the embodiments.

The person skilled in the art could understand that all or part of the steps for realizing the above embodiments may be completed by hardware, or by a program instructing relevant hardware, the program may be stored in a computer readable storage medium, and the above mentioned storage medium may be a read-only storage, a magnetic or an optical disk.

The foregoing is only the preferred embodiments of the present disclosure, but is not intended to limit the disclosure. Any modification, equivalent replacement, improvement, etc. made within the spirit and principle of the present disclosure should be included in the protection scope of the present disclosure.

## Claims

1. A method for processing order information, comprising steps of:
receiving an anonymous order instruction sent by a user;
performing an anonymization process to order information selected by the user so as to obtain anonymized information corresponding to the order information;
generating a first order containing the anonymized information; and
providing the first order to a third party.

2. The method according to claim 1, **characterized in that** the order information comprises at least the user's real contact information and real appellation , and the anonymized information comprises at least the user's virtual contact information and virtual appellation.

3. The method according to claim 2, **characterized in that** the step of performing the anonymization process to the order information selected by the user comprises steps of :
generating a virtual appellation corresponding to the user's real appellation according to a first preset rule; and/or
generating a virtual contact information corresponding to the user's real contact information according to a second preset rule, and associating the virtual contact information with the real contact information.

4. The method according to claim 3, **characterized in that** when the real contact information and the virtual contact information are a real contact telephone number and a virtual contact telephone number respectively, the step of associating the virtual contact information with the real contact information comprises a step of:
setting the real contact telephone number as a call forwarding number corresponding to the virtual contact telephone number).

5. The method according to claim 4, **characterized in that** the step of setting the real contact telephone number as the call forwarding number corresponding to the virtual contact telephone number comprises steps of:
when the virtual contact telephone number is a fixed telephone number or a mobile telephone number, sending a call forwarding instruction to a telephone exchange such that the telephone exchange sets the real contact telephone number as the call forwarding number of the virtual contact telephone number; and
when the virtual contact telephone number is a network telephone number, sending a call forwarding instruction to an Instant Messenger (IM) server or a Voice over Internet Protocol (VoIP) server such that the IM server or the VoIP server sets the real contact telephone number as the call forwarding number of the virtual contact telephone number).

6. The method according to claim 3, further comprising a step of:
when receiving a receipt success instruction sent by the user, disassociating the virtual contact information from the real contact information.

7. An apparatus for processing receiving information, comprising:
a receiving module configured to receive an anonymous order instruction sent by a user;
an anonymization processing module configured to perform an anonymization process to order information selected by the user so as to obtain anonymized information corresponding to the order information;
an order generating module configured to generate a first order containing the anonymized information obtained by the anonymization processing module; and
a providing module configured to provide the first order generated by the order generating module to a third party.

8. The apparatus according to claim 7, **characterized in that** the order information comprises at least the user's real contact information and real appellation , and the anonymized information comprises at least the user's virtual contact information and virtual appellation.

9. The apparatus according to claim 8, **characterized in that** the anonymization processing module comprises:
an appellation processing unit configured to generate a virtual appellation (13) corresponding to the user's real appellation according to a first preset rule; and/or
a contact processing unit configured to generate a virtual contact information corresponding to the user's real contact information according to a second preset rule, and associate the virtual contact information with real true contact information.

10. The apparatus according to claim 9, **characterized in that** the contact processing unit is configured to:
set the real contact telephone number as a call forwarding number corresponding to a virtual contact telephone number, when the real contact information and the virtual contact information are a real contact telephone number and a virtual contact telephone number respectively.

11. The apparatus according to claim 10, **characterized in that** the contact processing unit is configured to:
send a call forwarding instruction to a telephone exchange such that the telephone exchange sets the real contact telephone number as the call forwarding number of the virtual contact telephone number, when the virtual contact telephone number is a fixed telephone number or a mobile telephone number; and
send the call forwarding instruction to an Instant Messenger IM server or a Voice over Internet Protocol VoIP server such that the IM server or the VoIP server sets the real contact telephone as the call forwarding number of the virtual contact telephone number, when the virtual contact telephone number is a network telephone number.

12. The apparatus according to claim 9, **characterized in that** the contact processing unit (4022) is further configured to:
disassociate the virtual contact information from the real contact information when receiving a receipt success instruction sent by the user.
